# EUROPÄISCHE PATENTANMELDUNG

(11) **EP 2 385 324 A2**
(43) Veröffentlichungstag der Anmeldung: **09.11.2011**
(21) Anmeldenummer: 11161638.9
(22) Anmeldetag: 08.04.2011
(51) Int. Cl.: F24J 2/52, H01L 31/042, F24J 2/54

(54) **Vorrichtung zur Aufständerung von Solarmodulen**

(30) Priorität: 04.05.2010 DE 202010006443 U
(71) Anmelder: IDEEMATEC Deutschland GmbH, 94574 Wallerfing (DE)
(72) Erfinder: Kufner, Johann, 94527, Aholming (DE)
(74) Vertreter: Schinkel, Reta

(57) **Zusammenfassung**

Vorrichtung (1) zur Aufständerung von Solarmodulen (7), mit mehreren in einer Reihe aufgestellten Pfosten (2), wobei an jedem Pfosten (2) im Bereich seines oberen Endes ein Kopfteil (3) befestigt ist und an jedem Kopfteil (3) ein etwa quer zu der Pfostenreihe ausgerichteter Querträger (4) festgelegt ist, dadurch gekennzeichnet, dass das Kopfteil (3) ein Profilelement ist, und dass zwischen jedem Querträger (4) und dem Pfosten (2), an dessen Kopfteil (3) der Querträger (4) festgelegt ist, eine Strebe (5) verläuft.

## Beschreibung

Die Erfindung betrifft eine Vorrichtung zur Aufständerung von Solarmodulen mit mehreren in einer Reihe aufgestellten Pfosten, wobei an jedem Pfosten im Bereich seines oberen Endes ein Kopfteil befestigt ist und an jedem Kopfteil ein etwa quer zu der Pfostenreihe ausgerichteter Querträger festgelegt ist.

Aufständerungen mit Querträgern dieser Art werden im Zusammenhang mit der Errichtung von Solaranlagen verwendet und gestatten eine Montage der üblicherweise plattenförmigen Solarmodulen in einer bezüglich der Horizontalen geneigten Arbeitsebene. Die Befestigung der Querträger an den in der Erde verankerten Pfosten erfolgt in der Regel nicht direkt, sondern über ein Kopfteil. Bei den Lösungen im Stand der Technik ist dieses Kopfteil meist aufwändig gestaltet, zum Beispiel in verschiedene Richtungen gekantet und dadurch kostenintensiv herzustellen und aufwändig in der Montage.

Die DE 20 2005 008 159 U1 beschreibt zum Beispiel eine gattungsgemäße Vorrichtung zur Aufständerung von Solarmodulen, bei der an der Unterseite jedes Querträgers zwei nach unten weisende Winkel befestigt sind, die an einander gegenüberliegenden Seiten eines Pfostens festgelegt bzw. festgeschraubt sind. Es sind also zwei separate, unterschiedlich geformte Kopfteile notwendig.

Auch bei der DE 20 2009 016 353 U1 sind an jedem Pfosten zwei so genannte Querträgerhalter befestigt. Diese sind sehr aufwändig gestaltet, da der Querträger über ein erstes Traggelenk am ersten Querträgerhalter und über ein zweites Traggelenk am zweiten Querträgerhalter fixiert ist. Der Höhenabstand der beiden Traggelenke in Längsrichtung des Pfostens ist variabel einstellbar, wodurch der Neigungswinkel des Querträgers einstellbar ist. Auch diese Lösung ist durch die erforderlichen Gelenke aufwändig und somit kostenintensiv.

Schließlich offenbart die DE 20 2008 002 297 U1 eine Traganordnung für eine Solaranlage, bei der die Querträger derart ausgebildet sind, dass sie am jeweils zugeordneten Pfosten alternativ in mehreren Tragpositionen fixierbar sind, die bezüglich der Horizontalen unterschiedliche Neigungen der Auflageebene vorgeben. Hierzu sind die Querträger im Wesentlichen U-förmig gestaltet. Die Flansche bzw. Schenkel des Us sind sehr lang, da in ihnen entsprechende Befestigungslöcher angeordnet sind. Dadurch entfällt zwar ein Kopfteil am Pfosten, dafür sind jedoch die Querträger entsprechend aufwändig gestaltet und können nicht aus Standardprofilen hergestellt werden.

Die Erfindung hat sich daher die Aufgabe gesetzt, eine Vorrichtung zur Aufständerung von Solarmodulen bereitzustellen, die eine möglichst kostengünstige und schnell zu montierende Befestigungsmöglichkeit zwischen Querträger und Pfosten ermöglicht. Eine weitere Aufgabe liegt darin, mit einfachen Mitteln eine Variierung des Neigungswinkels der Querträger zu erlauben.

Diese Aufgabe löst die Erfindung mit einer Vorrichtung gemäß Anspruch 1, bei welcher das Kopfteil ein Profilelement ist, und bei der ferner zwischen jedem Querträger und dem dazugehörigen Pfosten eine Strebe verläuft.

In dieser Beschreibung wird jeweils von einem Pfosten, einem Kopfteil, einem Querträger und einer Stütze gesprochen, damit ist jedoch gemeint, dass jedem der zumindest zwei - vorzugsweise mehreren - in einer Reihe aufgestellten Pfosten jeweils eines dieser Bauteile zugeordnet ist.

Die Pfosten sind in der Regel annähernd senkrecht aufgestellt und im Erdreich, in einem Fundament oder auf einem Dach verankert. Am oberen Ende jedes Pfostens ist ein Profilelement als Kopfteil befestigt, wobei unter einem Profilelement ein Bauelement verstanden wird, dessen Querschnitt über seine Länge zumindest im Wesentlichen konstant ist. Profilelemente werden meistens aus Blechmaterial durch Walzen in einem Endlosverfahren hergestellt und nach Wunsch zugeschnitten. Das erfindungsgemäße Kopfteil kann z.B. 200 - 500 mm lang und ca. 50 - 120 mm breit sein. Bevorzugt ist das Kopfteil einstückig, und besonders bevorzugt handelt es sich um ein Metall- insbesondere Stahlprofil.

Unter einer Strebe wird eine balkenartige Verstrebung verstanden, die an einem Ende unterhalb des Kopfteils am Pfosten und am anderen Ende etwa auf halber Strecke zwischen Mitte und einem Ende des Querträgers befestigt ist.

Bevorzugt weist die Vorrichtung ferner mehrere, etwa parallel zu der Pfostenreihe verlaufende Längsträger auf, die an den Querträgern befestigt sind. Querträger und Längsträger bilden gemeinsam den so genannten Tragrahmen. Auf den Längsträgern werden bevorzugt die Solarmodule befestigt. Bei den Solarmodulen handelt es sich in der Regel um plattenförmige Fotovoltaik-Module.

Der Querträger ist in der Regel ungefähr, jedoch nicht genau, auf seiner halben Länge am Kopfteil festgelegt, so dass der Befestigungspunkt etwa am Schwerpunkt des mit Solarmodulen bestückten Tragrahmens liegt.

Bevorzugt ist die Längsrichtung des Profilelements des Kopfteils parallel zur Längsrichtung des Pfostens ausgerichtet. In anderen Worten ist das Profil des Kopfteils in der meist etwa senkrecht ausgerichteten Längsrichtung des Pfostens konstant. Auch der Pfosten ist vorzugsweise ein in Längsrichtung ausgerichtetes Profilelement. Dadurch kann das Kopfteil einfach an das Profil des Pfostens angelegt oder angepasst werden.

Die Strebe ist gemäß einer bevorzugten Ausführungsform an zumindest zwei vertikal voneinander beabstandeten Positionen an dem Pfosten befestigbar, wobei der Querträger in einer der Positionen den zur Maximierung der Sonneneinstrahlung gewünschten Neigungswinkel aufweist, und in einer anderen Position einen geringeren Neigungswinkel zur Horizontalen aufweist, insbesondere etwa waagerecht ausgerichtet ist. Die Strebe ist zum Beispiel durch übliche Befestigungsmittel wie Schrauben und Muttern am Querträger und am Pfosten befestigt. Vorzugsweise ist daher jede der zumindest zwei vertikal voneinander beabstandeten Positionen im Pfosten durch jeweils ein Langloch definiert. Dieses kann entweder direkt in dem Pfosten oder in einem an dem Pfosten befestigten Winkelstück angeordnet sein. Durch das Langloch ist ein Befestigungselement wie eine Schraube oder eine Niete hindurchführbar.

Bei dieser Ausführungsform kann der Querträger durch Befestigung der Strebe an der oberen Position am Pfosten zunächst in einer waagerechten oder nur wenig geneigten Stellung montiert werden. Diese Stellung vereinfacht die Montage der Längsträger und Solarmodule. Ist diese Montage erfolgt, kann der gesamte Tragrahmen in die eigentliche Betriebsstellung gekippt werden, in der -je nach Breitengrad - maximale Sonneneinstrahlung erwartet wird, indem die Strebe gelöst und an der dieser Neigung entsprechenden unteren Position neu befestigt wird.

Die Strebe kann als Flachmaterialzuschnitt oder bevorzugt als L- oder U-Profilelement ausgebildet sein, an dessen Enden im Mittelteil bzw. Steg des Profils jeweils Löcher angeordnet sind, an denen die Strebe am Pfosten bzw. am Querträger befestigt, insbesondere verschraubt, ist.

Die Pfosten selbst sind in der Regel als Stahlträger ausgebildet, wobei diese als U-Profilträger oder als Doppel-T-Profilträger ausgebildet sein können. Vorzugsweise können die gleichen Kopfteile sowohl bei U-Profilträgern als auch bei Doppel-T-Profilträgern zum Einsatz kommen, wobei letztere insbesondere IPE-Träger sein können. Durch Verwendung von Standard IPE-Formstahlträgern können die Herstellungskosten vermindert werden.

Das Kopfteil ist vorzugsweise am Pfosten durch eine formschlüssige und/oder kraftschlüssige Verbindung befestigt. Vorzugsweise ist eine stoffschlüssige Verbindung wie Schweißen oder Löten nicht notwendig, da dies zeitaufwändig und kostenintensiv ist. Stattdessen kommen bevorzugt Befestigungselemente wie Schrauben und Muttern, Nieten oder dergleichen zum Einsatz. Das Gleiche gilt für die Befestigung des Querträgers am Kopfteil.

Bevorzugt ist das das Kopfteil als L- oder U-Profilelement mit ein oder zwei Flanschen bzw. Schenkelabschnitten und einem flachen Steg (auch Mittelteil genannt) ausgebildet. Derartige Profile sind stabiler als ein einfacher Flachmaterialzuschnitt. Die Pfosten können ebenfalls als Profilelemente mit einem oder mehreren Flanschen und einem Steg ausgebildet sein. Vorzugsweise liegt dabei jeweils der Mittelteil des Kopfteils am Steg bzw. Mittelteil des Profilträgers des Pfostens an. Auch die Befestigung erfolgt vorzugsweise von Steg zu Steg. Bevorzugt liegt dabei der Mittelteil des Kopfteils formschlüssig am Steg eines Pfostens an. Formschlüssig bedeutet hier, dass die Flansche des Pfostens verhindern, dass das Kopfteil zu den Seiten wegrutschen kann. In vertikaler Richtung wird die Verbindung bevorzugt durch Verbindungselemente, die durch entsprechende Löcher im Mittelteil des Kopfteils und im Steg des Pfostens geführt werden, hergestellt.

Bei einer bevorzugten Ausführungsform ist das Kopfteil als U-Profilelement mit zwei Schenkelabschnitten und einem diese verbindenden flachen Mittelteil ausgebildet. Das Kopfteil liegt mit seinem Mittelteil am Pfosten und am Querträger an und ist durch Verbindungselemente, insbesondere Schraube-Mutter-Paare, die durch im Mittelteil angeordnete Löcher greifen, am Pfosten und am Querträger befestigt. Somit kann das Kopfteil einfach angelegt und am Pfosten festgeschraubt werden. Im nächsten Schritt wird auf ebenso einfache Weise der Querträger mit einer etwa vertikal ausgerichteten Wand an das nun ebenfalls vertikal ausgerichtete Mittelteil des Kopfteils angelegt und ebenfalls befestigt, insbesondere verschraubt.

Das Kopfteil weist im Bereich seines oberen Endes vorzugsweise zumindest zwei, vorzugsweise drei oder vier, horizontal voneinander beabstandete Löcher auf, wobei an einem der Löcher der Querträger befestigt, insbesondere verschraubt, ist. Durch die mehreren horizontal voneinander beabstandeten Löcher können Abweichungen in der Positionierung der Pfosten leicht ausgeglichen werden, wenn diese auf Grund von Bodengegebenheiten nicht exakt in einer Reihe stehen. Um einen Tragrahmen zu erhalten, ist es nämlich wichtig, dass die Querträger etwa parallel zueinander sind. Die mehreren Löcher am oberen Ende des Kopfteils sind quer zur Pfostenreihe voneinander beabstandet, sodass der Querträger an dem Loch befestigt werden kann, das der Längsachse der Pfostenreihe am nächsten liegt. Vorzugsweise wird der Querträger nur mit einem einzigen Befestigungselement, zum Beispiel einer Schraube, am Kopfteil befestigt. Dadurch kann die Neigung des Querträgers verändert werden, ohne ihn komplett vom Kopfteil zu lösen, beispielsweise indem lediglich die Schraube etwas gelockert wird.

In seinem unteren Bereich weist das Kopfteil vorzugsweise mehrere Langlöcher auf, die in Längsrichtung des Kopfteils ausgerichtet sind. Im Pfosten bzw. in dessen Steg sind vorzugsweise entsprechend Rundlöcher vorgesehen, durch die geeignete Befestigungselemente wie Schrauben geführt werden können, um das Kopfteil an jedem der Langlöcher am Pfosten zu befestigen. Die Langlöcher erlauben eine gewisse Höhenvariation bei der Montage des Kopfteils. Dadurch können eventuelle Höhendifferenzen zwischen den einzelnen Pfosten ausgeglichen werden, wenn diese zum Beispiel nicht exakt gleich weit in den Boden eingebracht werden konnten. Ein Langloch kann beispielsweise 30 - 50 mm lang sein.

Vorzugsweise sind im Kopfteil mehrere Langlöcher, insbesondere zwei, vier oder sechs Langlöcher vorgesehen. Dadurch wird eine sichere Befestigung des Kopfteils am Pfosten ermöglicht, auch wenn durch jedes einzelne Langloch lediglich eine relativ kleine Standardschraube, zum Beispiel eine M12-Schraube geführt wird.

Ein besonderer Vorteil der Erfindung liegt darin, dass die gewählte Konfiguration des Kopfteils erlaubt, dieses sowohl am Pfosten als auch am Querträger jeweils durch die gleichen Verbindungselemente zu befestigen, insbesondere jeweils durch Schraube-Mutter-Paare der gleichen Größe, besonders bevorzugt durch M12-Schrauben und entsprechende Muttern. Dies ist kostengünstig zu beschaffen, und die Verwendung lediglich einer einzigen Schraubengröße vereinfacht und beschleunigt die Montage.

Der Querträger ist vorzugsweise ebenfalls als Profilelement ausgebildet, insbesondere als Z-, U- oder als T-Profilelement. Die Befestigung des Kopfteils erfolgt vorzugsweise am Steg bzw. Mittelteil des Profils, das etwa senkrecht ausgerichtet an den Mittelteil des Kopfteils angelegt wird.

Vorzugsweise sind sowohl Pfosten, Kopfteil, Querträger als auch Strebe als Profilelemente hergestellt. Dies erlaubt eine besonders kostengünstige Herstellung der erfindungsgemäßen Vorrichtung.

Gemäß einer besonderen Ausführungsform sind Kopfteil und Querträger mit identischem Profil, insbesondere U-Profil hergestellt.

Die Erfindung wird nun an Hand von Ausführungsbeispielen mit Bezug auf die beiliegende Zeichnungen näher erläutert. In den Zeichnungen zeigen:
- Fig. 1: eine perspektivische Ansicht einer erfindungsgemäßen Vorrichtung;
- Fig. 2: eine perspektivische Ansicht einer ersten Ausführungsform von Pfosten, Kopfstück, Querträger und Strebe;
- Fig. 3: ein Querschnitt durch Pfosten und Kopfteil entlang der Linie III-III in Fig. 2;
- Fig. 4: eine perspektivische Ansicht von Pfosten, Kopfteil, Querträger und Strebe gemäß einer zweiten Ausführungsform;
- Fig. 5: ein Querschnitt durch Pfosten und Kopfteil entlang der Linie V-V in Fig. 4;
- Fig. 6: eine Draufsicht auf ein Kopfteil;
- Fig. 7: eine Seitenansicht der erfindungsgemäßen Vorrichtung in zwei verschieden geneigten Positionen des Querträgers.

Gleiche Teile sind in den Zeichnungen mit gleichen Bezugszeichen gekennzeichnet.

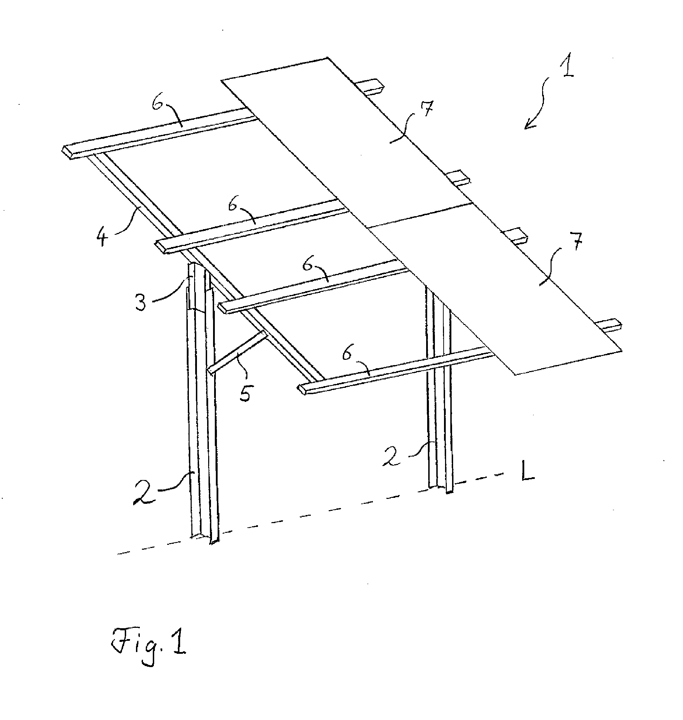

Fig. 1 zeigt den Grundaufbau einer erfindungsgemäßen Aufständerung. Hierbei handelt es sich vorzugsweise um eine Festaufständerung, das heißt, der Azimuthwinkel wird nicht nachgeführt. Auch die Neigung der Querträger 4 zur Horizontalen bleibt in der Regel nach der Montage konstant, kann jedoch für jede Solaranlage durch Veränderung der Länge der Streben 5 neu festgelegt werden, insbesondere an Hand des Breitengrades auf eine maximale Sonneneinstrahlung optimiert werden.

Die Aufständerung umfasst zwei bzw. eine längere Reihe von Pfosten 2, die entlang einer Linie L in regelmäßigen Abständen aufgereiht sind. Die Pfosten 2 werden beispielsweise tief in den Boden gerammt oder auf andere Weise am Boden verankert. Am oberen Ende jedes Pfostens 2 ist ein Kopfteil 3 befestigt, und an diesem wiederum ein zur Horizontalen geneigter Querträger 4. Die Neigungsrichtung des Querträgers 4 wird festgelegt und die Befestigung versteift durch die Strebe 5, die zwischen jedem Querträger 4 und dem dazugehörigen Pfosten 2 verläuft. Auf die Querträger sind mehrere parallel zur Linie L verlaufende Längsträger 6 aufgelegt und zum Beispiel durch Verschrauben an den Querträgern 4 befestigt. Auf die Längsträger 6 werden wiederum die Solarmodule 7 aufgesetzt und durch geeignete Klemmen oder andere Befestigungselemente befestigt. In Fig. 1 sind nur zwei Solarmodule 7 dargestellt, bei einer fertigen Solaranlage ist jedoch Modul 7 neben Modul 7 aneinander gereiht auf eine viele Pfosten 2 und Querträger 4 umfassende Aufständerungsreihe montiert.

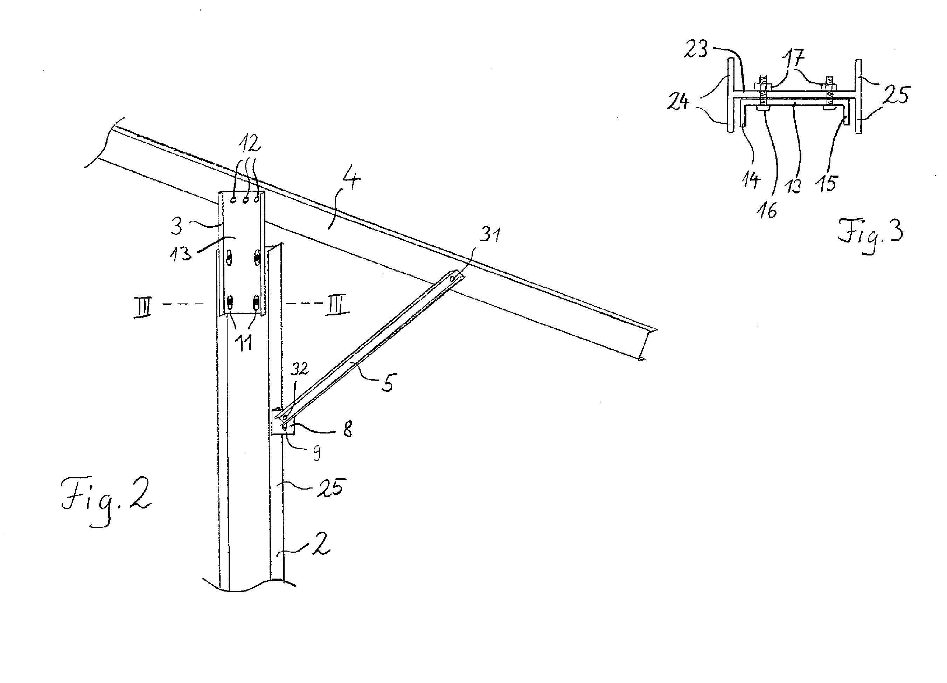

Fig. 2 zeigt in größerem Detail die Befestigung eines Querträgers 4 an einem Pfosten 2. Der Pfosten 2 ist in diesem Fall ein Doppel-T- bzw. I-Profilelement, insbesondere ein IPE-Stahlträger. Wie im Querschnitt der Fig. 3 zu sehen, weist dies einen flachen Steg 23 und an den Seiten jeweils Doppelflansche 24 bzw. 25 auf. Am Steg 23 ist an einer Seite das Kopfteil 3 angelegt, welches bei dieser Ausführungsform als U-Profilelement ausgebildet ist. Das U-Profilelement weist einen ebenfalls flachen Mittelteil 13 und zwei Schenkelabschnitte 14, 15 auf. Im Mittelteil 13 des Kopfteils 3 sind vier Langlöcher 11 angeordnet, welche in je zwei vertikalen und horizontalen Reihen angeordnet sind. Alternativ können auch mehr als zwei horizontale Reihen oder mehr als zwei vertikale Reihen von Langlöchern 11 vorgesehen werden.

Durch jedes der Langlöcher 11 ist eine Schraube 16 hindurchgeführt, welche durch ein entsprechendes Rundloch im Steg 23 des Pfostens ragt und auf der Rückseite mit einer Mutter 17 gehaltert ist.

Das U-Profil des Kopfteils 13 ist schmaler als das Doppel-T-Profil des Pfostens 2. In machen Ausführungsformen kann die Breite auch so gestaltet sein, dass das Kopfstück 3 praktisch formschlüssig zwischen die Flansche 24, 25 des Pfostens 2 eingepasst werden kann, sodass die Schenkelabschnitte 14, 15 direkt an den Flanschen 24, 25 anliegen und das Kopfteil 3 somit in seitlicher Richtung formschlüssig am Pfosten 2 gehaltert ist.

In seinem oberen Bereich weist der Mittelteil 13 des Kopfstücks 3 die drei horizontal nebeneinander angeordneten Löcher 12 auf. Durch eines dieser Löcher ist eine vorzugsweise zu den eben genannten Schrauben 16 gleichartige Schraube geführt, mit der der Querträger 4 am Kopfstück 3 befestigt ist.

Etwa auf halbem Weg zwischen der Befestigung am Kopfteil und dem unteren Ende des Querträgers 4 ist die Strebe 5 mit einer Schraube 31 am Querträger 4 befestigt. Die Strebe 5 hat die Form eines U-Profilelementes, in dessen Mitteil an den Enden entsprechende Löcher für die Schrauben 31 und 32 vorgesehen sind. Die Schraube 32 ist durch ein Langloch 9 in einem Winkelstück 8 geführt, welches am Flansch 25 des IPE-Profilträgers des Pfostens 2 befestigt ist, zum Beispiel durch Schrauben oder Schweißen. Durch das Langloch 9 können geringfügige Justierungen am Neigungswinkel des Querträgers 4 vorgenommen werden.

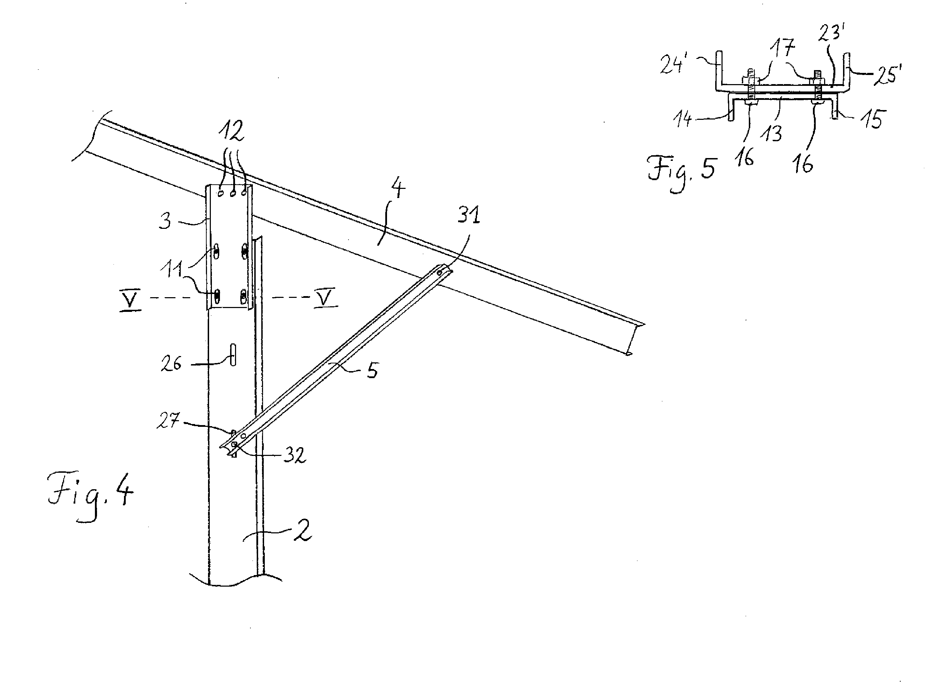

Fig. 4 zeigte eine andere Ausführungsform, bei welcher der Pfosten 2 als U-Profilelement ausgebildet ist. Im Profil weist der Pfosten 2 somit wiederum einen Steg 23' und zwei zur gleichen Seite abstehende Flansche 24' und 25' auf, wie in Fig. 5 erkennbar. Das Kopfteil 3 ist wiederum ein U-Profilelement mit den Schenkelabschnitten 14, 15. Der Mittelteil 13 des Kopfteils 3 liegt formschlüssig im Mittelteil bzw. Steg 23 des Pfostens 2 an. Das Kopfteil 3 ist baugleich zu der Ausführungsform der Fig. 2 und auf die gleiche Weise an den Langlöchern 11 mit Schrauben 16 am Pfosten 2 und an den Löchern 12 am Querträger 4 befestigt.

Der Hauptvorteil eines Pfostens 2 mit U-förmigem Profil liegt darin, dass die Langlöcher 26, 27, an denen die Strebe 5 auf verschiedenen vertikalen Positionen befestigbar ist, direkt im Pfosten 2, nämlich in dessen Steg 23' ausgebildet sein können. Es entfällt also die Notwendigkeit für ein Winkelstück 8. Das obere Langloch 26 markiert eine Position, in der der Querträger 4 zumindest im Wesentlichen waagerecht angeordnet ist, wenn das untere Ende der Strebe 5 am Langloch 26 angeschraubt ist. In der dargestellten Position ist die Strebe 5 mit einer Schraube 32 am unteren Langloch 27 befestigt und der Querträger 4 und damit der gesamte Tragrahmen mit den Solarmodulen 7 entsprechend nach Süden geneigt. An jedem Ende der Strebe 5 können mehrere Löcher vorgesehen sein, wie in Fig. 4 dargestellt, um durch Auswahl eines der Löcher den Neigungswinkel des Querträgers 4 zu justieren.

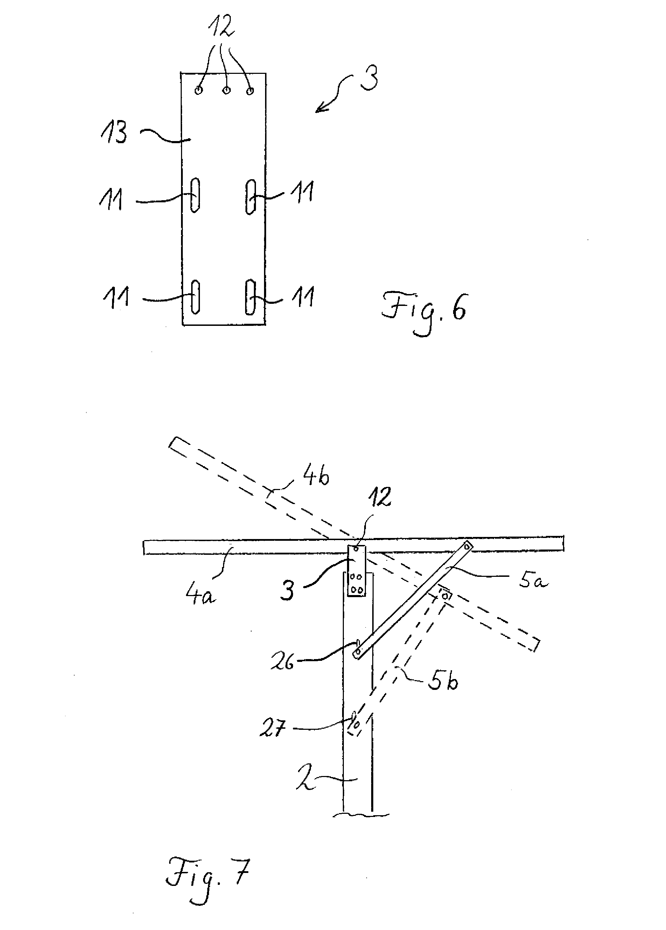

Fig. 6 zeigt eine Draufsicht auf den flachen Mittelteil 13 eines Kopfstücks 3. Die Schenkelabschnitte 14, 15 des U-Profils ragen aus der Papierebene heraus und sind somit nicht zu sehen. Die Figur zeigt im Detail eine Reihe aus mehreren Löchern 12 im oberen Bereich, wobei durch eines dieser Löcher eine Schraube zur Befestigung am Querträger 4 gesteckt wird. Ferner sind vier Langlöcher 11 zu sehen, die zur Aufnahme von Schrauben 16 zur Befestigung am Pfosten 2 geführt werden.

Fig. 7 zeigt schematisch eine erfindungsgemäße Vorrichtung von der Seite in zwei verschiedenen Neigungspositionen. In der mit durchgezogenen Linien dargestellten Position ist der Querträger 4 praktisch waagerecht, da die Strebe 5a am Langloch 26 im Pfosten 2 festgeschraubt ist. Diese Position wird bei einer Montage einer Solaranlage bevorzugt zuerst montiert, denn eine waagerechte Stellung des Querträgers 4a und somit des gesamten Tragrahmens erlaubt es, die Längsträger 6 und/oder die Solarmodule 7 zunächst an der richtigen Position auf die Querträger 4a aufzulegen und dann in Ruhe dort zu befestigen.

Ist dieser Teil der Montage vollendet, wird die Schraube, mit der der Querträger 4 am Loch 12 des Kopfteils 3 befestigt ist, etwas gelockert. Dann wird die durch das Langloch 26 geführte Schraube gelöst und der gesamte Tragrahmen nach rechts gekippt, bis das untere Ende der Strebe das untere Langloch 27 erreicht. Die Strebe wird dann in dieser Position 5b am Langloch 27 festgeschraubt, und die Schraube, mit der der Querträger 4b am Kopfteil 3 befestigt ist, wird fest angezogen. Nach dieser stark erleichterten und einfachen Montage, bei der vorzugsweise nur eine Art von Schraube-Mutter-Paaren zum Einsatz kommt, befindet sich der Querträger 4b in der Betriebsstellung.

### Bezugszeichenliste

- 1: Vorrichtung zur Aufständerung
- 2: Pfosten
- 3: Kopfteil
- 4: Querträger
- 5: Strebe
- 6: Längsträger
- 7: Solarmodul
- 8: Winkelstück
- 9: Langloch
- 11: Langlöcher
- 13: Mittelteil des Kopfteils
- 14, 15: Schenkelabschnitte des Kopfteils
- 16: Schrauben
- 17: Muttern
- 12: Löcher
- 23: Steg
- 24,25: Flansche
- 26, 27: Langlöcher im Pfosten 2
- 31, 32: Löcher/Schrauben in der Strebe 5

## Patentansprüche

1. Vorrichtung (1) zur Aufständerung von Solarmodulen (7), mit mehreren in einer Reihe aufgestellten Pfosten (2), wobei an jedem Pfosten (2) im Bereich seines oberen Endes ein Kopfteil (3) befestigt ist und an jedem Kopfteil (3) ein etwa quer zu der Pfostenreihe ausgerichteter Querträger (4) festgelegt ist,
**dadurch gekennzeichnet, dass** das Kopfteil (3) ein Profilelement ist, und dass zwischen jedem Querträger (4) und dem Pfosten (2), an dessen Kopfteil (3) der Querträger (4) festgelegt ist, eine Strebe (5) verläuft.

2. Vorrichtung nach Anspruch 1, **dadurch gekennzeichnet, dass** die Längsrichtung des Profilelements des Kopfteils (3) parallel zur Längsrichtung des Pfostens (2) ist.

3. Vorrichtung nach Anspruch 1 oder 2, **dadurch gekennzeichnet, dass** die Strebe (5) an zumindest zwei vertikal voneinander beabstandeten Positionen (26, 27) an dem Pfosten (2) befestigbar ist, wobei der Querträger (4) in einer der Positionen den zur Maximierung der Sonneneinstrahlung gewünschten Neigungswinkel aufweist, und in einer anderen Position einen geringeren Neigungswinkel zur Horizontalen aufweist, insbesondere etwa waagerecht ausgerichtet ist.

4. Vorrichtung nach Anspruch 3, **dadurch gekennzeichnet, dass** an den zumindest zwei vertikal voneinander beabstandeten Positionen jeweils ein Langloch (26, 27) in dem Pfosten (2) oder in einem an dem Pfosten (2) befestigten Winkelstück (8) angeordnet ist, wobei durch das Langloch (26, 27) ein Befestigungselement führbar ist.

5. Vorrichtung nach einem der vorhergehenden Ansprüche, **dadurch gekennzeichnet, dass** die Strebe (5) als L- oder U-Profilelement ausgebildet ist, an dessen Enden im Mittelteil des Profils jeweils Löcher angeordnet sind, an denen die Strebe (5) am Pfosten (2) bzw. am Querträger (4) befestigt ist.

6. Vorrichtung nach einem der vorhergehenden Ansprüche, **dadurch gekennzeichnet, dass** die Pfosten (2) wahlweise als U-Profilelemente oder als Doppel-T-Profilelemente ausgebildet sind.

7. Vorrichtung nach einem der vorhergehenden Ansprüche, **dadurch gekennzeichnet, dass** das Kopfteil (3) ein L-Profilelement oder ein U-Profilelement ist.

8. Vorrichtung nach einem der vorhergehenden Ansprüche, **dadurch gekennzeichnet, dass** das Kopfteil (3) als U-Profilelement mit zwei Schenkelabschnitten (14, 15) und einem diese verbindenden, flachen Mittelteil (13) ausgebildet ist, wobei das Kopfteil (3) mit dem Mittelteil (13) am Pfosten (2) und am Querträger (4) anliegt und durch Verbindungselemente (16), die durch im Mittelteil (13) angeordnete Löcher greifen, am Pfosten (2) und am Querträger (4) befestigt ist.

9. Vorrichtung nach einem der vorhergehenden Ansprüche, **dadurch gekennzeichnet, dass** das Kopfteil (3) als L- oder U-Profilelement mit ein oder zwei Schenkelabschnitten (14, 15) und einem flachen Mittelteil (13) ausgebildet ist, und dass die Pfosten (2) als Profilelemente mit einem oder mehreren Flanschen (24, 25) und einem Steg (23) ausgebildet sind, wobei das Mittelteil (13) des Kopfteils formschlüssig am Steg (23) eines Pfostens (2) anliegt.

10. Vorrichtung nach einem der vorhergehenden Ansprüche, **dadurch gekennzeichnet, dass** das Kopfteil (3) im Bereich seines oberen Endes zumindest zwei horizontal voneinander beabstandete Löcher (12) aufweist, wobei an einem der Löcher der Querträger (4) befestigt, insbesondere verschraubt ist.

11. Vorrichtung nach einem der vorhergehenden Ansprüche, **dadurch gekennzeichnet, dass** das Kopfteil (3) durch mehrere Befestigungselemente, insbesondere Schrauben, die durch mehrere Langlöcher (11) im Kopfteil (3) geführt werden, am Pfosten (2) befestigt ist.

12. Vorrichtung nach einem der vorhergehenden Ansprüche, **dadurch gekennzeichnet, dass** der Pfosten (2) und das Kopfteil (3) sowie das Kopfteil (3) und der Querträger (4) jeweils durch die gleichen Verbindungselemente miteinander verbunden sind, insbesondere jeweils durch Schraube-Mutter-Paare (16, 17) der gleichen Größe.

13. Vorrichtung nach einem der vorhergehenden Ansprüche, **dadurch gekennzeichnet, dass** der Querträger (4) als Profilelement, insbesondere als Z-Profilelement, als U-Profilelement oder als T-Profilelement ausgebildet ist.

14. Vorrichtung nach einem der vorhergehenden Ansprüche mit mehreren, etwa parallel zu der Pfostenreihe verlaufenden Längsträgern (6), die an Querträgern (4) festgelegt sind.

15. Vorrichtung nach einem der vorhergehenden Ansprüche, **dadurch gekennzeichnet, dass** Pfosten (2), Kopfteil (3), Querträger (4) und Strebe (5) als Profilelemente hergestellt sind.
